Europäisches Patentamt

European Patent Office

Office européen des brevets

(19)

(11) **EP 1 455 164 A1**

(12) **EUROPÄISCHE PATENTANMELDUNG**

(43) Veröffentlichungstag:
08.09.2004 Patentblatt 2004/37

(51) Int Cl.⁷: **G01D 5/14**, G01D 5/20

(21) Anmeldenummer: 04002388.9

(22) Anmeldetag: 04.02.2004

(84) Benannte Vertragsstaaten:
**AT BE BG CH CY CZ DE DK EE ES FI FR GB GR HU IE IT LI LU MC NL PT RO SE SI SK TR**
Benannte Erstreckungsstaaten:
**AL LT LV MK**

(30) Priorität: **07.03.2003 DE 10309941**

(71) Anmelder: **ROBERT BOSCH GMBH**
**70442 Stuttgart (DE)**

(72) Erfinder:
• **Knecht, Gerhard**
**76473 Iffezheim (DE)**
• **Frey, Heiko**
**76476 Bischweier (DE)**
• **Schmid, Johannes**
**4040 Linz (AT)**
• **Kaiserseder, Markus**
**4310 Mauthausen (AT)**
• **Koberstaedt, Markus**
**37170 Uslar (DE)**

(54) **Vefahren zur Bestimmung eines Drehwinkels**

(57)     Die Erfindung bezieht sich auf ein Verfahren zur Bestimmung eines Drehwinkels auf der Grundlage von mittels mindestens einem Winkelsensor gemessenen Signalen, umfassend ein dem Drehwinkel zuordenbares Sinus-Signal und ein dem Drehwinkel zuordenbares Cosinus-Signal, mit folgenden Schritten:

A) Bestimmung eines Cosinus-Wertes und eines Sinus-Wertes, die dem zu bestimmenden Drehwinkel zugeordnet sind,
B) Zuordnung des Cosinus- und des Sinus-Wertes zu einem von n Sektoren, in die eine Periode des Sinus- und Cosinus-Signals einteilbar ist, anhand von eindeutigen Zuordnungskriterien,
C) Bestimmung eines dem Betrag des Cosinus- und/oder Sinus-Wertes zugeordneten Basiswinkels anhand einer Tabelle, die zu dem Betrag des Cosinus-Wertes und/oder zu dem Betrag des Sinus-Wertes gehörende Arkusfunktionswerte enthält und
D) Addition oder Subtraktion des Basiswinkels zu oder von einem von der Zuordnung in Schritt B) abhängigen Sektorgrenzwinkel zur Berechnung des Drehwinkels.

Fig.2a

EP 1 455 164 A1

Fig.2b

Fig.2c

**Beschreibung**

Technisches Gebiet

Zur Messung von mechanischen Drehwinkeln werden häufig Messmethoden eingesetzt, die auf der Auswertung von Sinus- und Cosinus-Signalen eines Winkel sensors beruhen. Beispiele für solche Winkelsensoren sind anisotropische magnetoresistive Sensoren (AMR-Sensoren), auf dem Riesenmagnetowiderstand beruhende Sensoren (GMR-Sensoren), Resolver, Hall-Sensoren sowie optische oder mikromechanische Geber. Derartige Sensoren sind beispielsweise einsetzbar bei der Drehwinkelerfassung von bürstenlos kommutierten Elektromotoren, von Nockenwellen oder von Fahrzeuglenkrädern.

Stand der Technik

Auswerteverfahren zur Auswertung von Sinus- und Cosinus-Signalen eines Winkelsensors sind im Stand der Technik bekannt. Üblicherweise wird zur Bestimmung des Drehwinkels aus den gemessenen Sinus- und Cosinus-Werten die Tangensfunktion berechnet und daraus die Inverstangensfunktion. Beispiele für solche Auswerteverfahren sind der DE-A 100 42 602 oder der DE-A 198 39 446 zu entnehmen.
Die im Stand der Technik bekannten Auswerteverfahren erfordern jedoch einen hohen Rechenaufwand, um den Drehwinkel aus dem Sinus- und dem Cosinus-Wert des Sensors zu bestimmen. Insbesondere die bei der Ermittlung der Tangensfunktion erforderliche Division resultiert in einer langen Bearbeitungszeit durch die üblicherweise verwendeten Auswerteschaltungen.

Darstellung der Erfindung

Das erfindungsgemäße Verfahren vermeidet die im Stand der Technik auftretenden Nachteile und ermöglicht unter anderem die Verkürzung der Bearbeitungszeit der Interrupt-Routine zur Winkelberechnung unter Vermeidung einer Division. Insbesondere erlaubt es das erfindungsgemäße Verfahren den mechanischen Drehwinkel bei AMR-Sensoren im Bereich von 0° bis 180° und bei GMR-Sensoren im Bereich von 0° bis 360° mit geringem Rechenaufwand aus dem Sinus- und dem Cosinus-Wert des Sensorausgangs zu bestimmen.
Dies wird erfindungsgemäß erreicht durch ein Verfahren zur Bestimmung eines Drehwinkels auf der Grundlage von mittels mindestens einem Winkelsensor gemessenen Signalen, umfassend ein dem Drehwinkel zuordenbares Sinus-Signal und ein dem Drehwinkel zuordenbares Cosinus-Signal, mit folgenden Schritten:

A) Bestimmung eines Cosinus-Wertes und eines Sinus-Wertes, die dem zu bestimmenden Drehwinkel zugeordnet sind,

B) Zuordnung des Cosinus- und des Sinus-Wertes zu einem von n Sektoren, in die eine Periode des Sinus- und Cosinus-Signals einteilbar ist, anhand von eindeutigen Zuordnungskriterien,

C) Bestimmung eines dem Betrag des Cosinus- und/oder Sinus-Wertes zugeordneten Basiswinkels anhand einer Tabelle, die zu dem Betrag des Cosinus-Wertes und/oder zu dem Betrag des Sinus-Wertes gehörende Arkusfunktionswerte enthält und

D) Addition oder Subtraktion des Basiswinkels zu oder von einem von der Zuordnung in Schritt B) abhängigen Sektorgrenzwinkel zur Berechnung des Drehwinkels.

Dabei werden die Sinus- und Cosinus-Werte, insbesondere von den Ausgängen eines AMR- oder eines GMR-Sensors, vorzugsweise über einen A/D-Wandler ausgelesen. Die so gemäß Schritt A) des erfindungsgemäßen Verfahrens bestimmten Wertepaare werden in Schritt B) jeweils einem von n Sektoren zugeordnet (n eine natürliche Zahl > 1). Jeder Sektor umfasst einen bestimmten (vorzugsweise gleichgroßen) Winkelbereich. Beispielsweise sind ein Sinus- und Cosinus-Signal mit einer Periodizität von 180° in acht Sektoren mit einer Breite von jeweils 22,5° einteilbar (Sektor 0 von 0° bis 22,5°, Sektor 1 von 22,5° bis 45°, ....., Sektor 7 von 157,5° bis 180°). Die Sektoren müssen dabei so gewählt werden, dass jedes mögliche Wertepaar (Cosinus-Wert/Sinus-Wert) anhand von Zuordnungskriterien nur einem Sektor eindeutig zugeordnet werden kann.
In Schritt C) des erfindungsgemäßen Verfahrens wird eine Tabelle verwendet, die einen zu dem Betrag des Cosinus- und/oder zu dem Betrag des Sinus-Wertes gehörenden Arkusfunktionswert enthält, der als Basiswinkel dient. Bei einer Periodizität von ≠360° enthält die Tabelle einen entsprechend angepassten Arkusfunktionswert, zum Beispiel bei einer Periodizität von 180° einen gegenüber dem bei 360° halbierten Arkusfunktionswert. Die zu dem Betrag der Cosinus- und der Sinus-Funktion gehörenden Arkusfunktionswerte besitzen einen Wertebereich von 0° bis 90°, so dass der Basiswinkel immer in diesem Wertebereich und den zugehörigen Sektoren liegt.

In Schritt D) wird aus dem aus der Tabelle entnommenen Basiswinkel und der Kenntnis des Sektors, in dem der zu bestimmende Drehwinkel liegt, dieser Drehwinkel berechnet. Dabei wird der Basiswinkel zu oder von einem bestimmten Sektorgrenzwinkel addiert oder subtrahiert. Als Sektorgrenzwinkel sind dabei Winkel bezeichnet, die den jeweiligen Sektor begrenzen, also in dem oben genannten Beispiel mit acht Sektoren die Winkel 0°, 22,5°, 45°, ....., 180°. Durch die Addition oder Subtraktion wird der Basiswinkel in den in Schritt B) ermittelten Sektor verschoben, um den Drehwinkel zu bestimmen.

In einer Ausführungsform der vorliegenden Erfindung wird mit dem gemessenen Sinus-Signal und dem gemessenen Cosinus-Signal eine Offset-Korrektur und eine Amplitudennormierung durchgeführt. Vorzugsweise wird die Offset-Korrektur vor der Zuordnung des Cosinus- und des Sinuswertes zu einem Sektor und die Amplitudennormierung vor der Bestimmung des Basiswinkels durchgeführt.

In einer Ausführungsform der vorliegenden Erfindung werden die offsetkorrigierten und normierten Signale einer Plausibilitätsprüfung unterzogen. Dies erfolgt durch Einsetzen in die Formel $\cos^2 x + \sin^2 y = 1$, wobei cos x der jeweilige Cosinuswert und sin y der jeweilige Sinuswert ist. Ein Fehler (z.B. ein Drahtbruch) kann so erkannt werden. Dabei wird ein Toleranzbereich vorgegeben, da sich der Sinus- und der Cosinuswert aufgrund von Ungenauigkeiten beim Offset- und Amplitudenabgleich leicht verschieben können. Da bei der Berechung mit einem Mikrocontroller bevorzugt mit Festkommazahlen gerechnet wird, haben die Sinus- und Cosinuswerte keine Amplitude von 1, sondern eine größere Amplitude. Beträgt die Amplitude beispielsweise 512, so muss die Abfrage wie folgt lauten: $\cos^2 x + \sin^2 y = 262144 (= 2^{18})$. Das Formel zur Plausibilitätsprüfung muss folglich an den Wert der Amplituden angepasst werden.

Die Winkelgenauigkeit von Sinus-Cosinus-Winkelsensoren wird durch Offset-Effekte begrenzt. Offset-Effekte können insbesondere bei Einsatz der Sensoren unter hohen Temperaturen bzw. in einem breiten Temperaturbereich auftreten. Beispielsweise führt eine Winkelmessung im Kfz-Motorraum, in welchem typischerweise niedrige und hohe Temperaturen herrschen, bei herkömmlichen Winkelsensoren zu nicht zu vernachlässigenden Offset-Effekten. Hierdurch ist es notwendig, falls keine Offset-Korrektur durchgeführt wird, Fertigungs- und Betriebstoleranzbänder für die mechanischen, magnetischen, optischen, elektrischen oder mikromechanischen Bauteile derartiger Sensoren möglichst niedrig anzusetzen, wodurch ihre Bereitstellungskosten steigen.

Zur Offset-Korrektur kann der jeweilige Offset des Sinus- und des Cosinus-Signals durch ein im Stand der Technik bekanntes Verfahren ermittelt werden. In einer bevorzugten Ausführungsform der vorliegenden Erfindung wird zur Offset-Korrektur jeweils ein Offset für das Sinus-Signal und das Cosinus-Signal mittels der folgenden Formel berechnet:

$$Offset = \frac{I_{max} + I_{min}}{2},$$

mit

$I_{max}$ = Maximalwert des Sinus- bzw. Cosinus-Signals und
$I_{min}$ = Minimalwert des Sinus- bzw. Cosinus-Signals.

Der jeweils bestimmte Offset wird von dem betreffenden Sinus- und Cosinus-Werten abgezogen.

Zur korrekten Drehwinkelberechnung ist es weiterhin erforderlich, dass die Amplituden des ggf. offsetkorrigierten Sinus- und des Cosinus-Signals normiert sind. Mit Hilfe eines Normierungsfaktors kann die Amplitude so normiert werden, dass sie bei einem bestimmten Winkel einem genau definierten Wert entspricht. In einer bevorzugten Ausführungsform der vorliegenden Erfindung wird zur Amplitudennormierung jeweils ein Normierungsfaktor N für das Sinus-Signal und für das Cosinus-Signal mittels der folgenden Formel berechnet:

$$N = \frac{A_{norm}}{(I_{max} - I_{min})/2},$$

mit

$I_{max}$ = Maximalwert des Sinus- bzw. Cosinus-Signals,
$I_{min}$ = Minimalwert des Sinus- bzw. Cosinus-Signals und
$A_{norm}$ = normierte Amplitude.

Um die Offset-Korrektur und die Amplitudennormierung gemäß den beiden oben genannten bevorzugten Ausführungsformen durchführen zu können, müssen der Maximal- und der Minimalwert des Sinus- und des Cosinus-Signals bestimmt werden. Damit die Maxima und Minima mit Sicherheit gefunden werden, muss sichergestellt sein, dass bei deren Ermittlung der Winkelbereich einer Periode des Sensorsignals vollständig durchlaufen wird.

Die Sinus- und Cosinus-Signale von Winkelsensoren können von Störsignalen überlagert werden. Die Störsignale resultieren beispielsweise aus Verstärkerrauschen, dem Einstrahlen von Schaltflanken oder der Beeinflussung durch benachbarte Bauteile. In einer bevorzugten Ausführungsform der vorliegenden Erfindung werden die gemessenen Signale durch zweifache (in kurzen Zeitintervallen aufeinanderfolgende) A/D-Abtastung von an den Ausgängen des Winkelsensors anliegenden Spannungen und anschließende Mittelwertbildung und Tiefpassfilterung oder durch einfache A/D-Abtastung und anschließende Filterung mit einem Medianfilter von Störsignalen bereinigt. Die zweifache A/-D-Abtastung kann dabei beispielsweise innerhalb von 50µs stattfinden.

### Zeichnung

Anhand der Zeichnung wird die vorliegende Erfindung nachstehend näher erläutert.
Es zeigt:

Figur 1        eine Winkelsensoranordnung, ein damit gemessenes Signal und die Signalauswertung im Stand der Technik und

Figuren 2a bis 2c     eine graphische Erläuterung des erfindungsgemäßen Verfahrens in einer bevorzugten Ausführungsform.

### Ausführungsvarianten

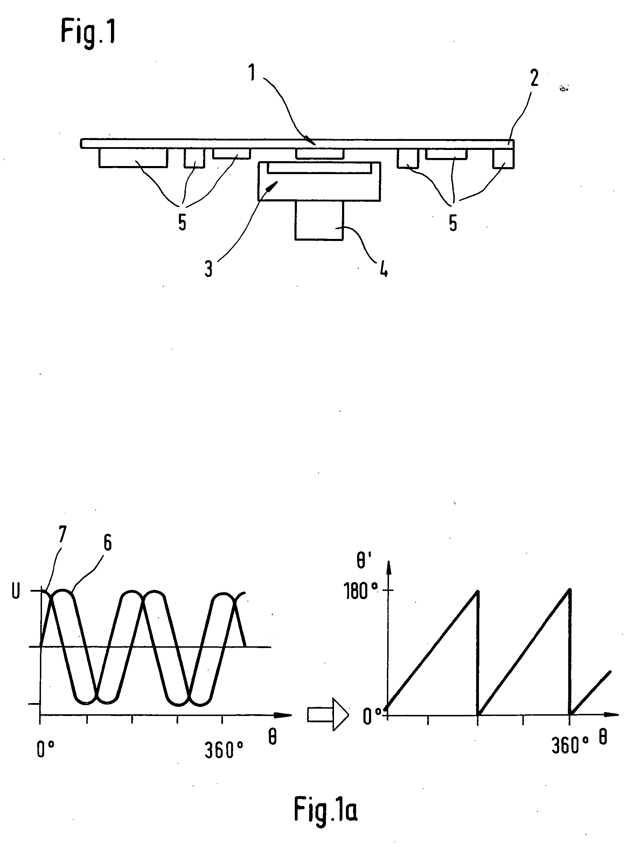

Fig. 1 zeigt eine Winkelsensoranordnung, ein mit dieser Anordnung gemessenes Signal und die Auswertung dieses Signals gemäß dem Stand der Technik.
Der Winkelsensor 1 (zum Beispiel ein AMR-Sensor) ist auf einer Leiterplatte 2 angeordnet. Dem Winkelsensor 1 liegt ein Magnet 3 berührungslos gegenüber, der an einer rotierenden Welle 4 befestigt ist. Die Anordnung des Winkelsensors 1 und des Magneten 3 dient der Messung des Drehwinkels der rotierenden Welle 4. An den Ausgängen des Winkelsensors 1 wird dabei ein Signal ausgelesen, das durch die ebenfalls auf der Leiterplatte 2 angeordnete Auswerteelektronik 5 ausgewertet wird.
In der linken Hälfte von Fig. 1a ist das am Winkelsensor 1 ausgelesene Signal ($U_1$, $U_2$) dargestellt, das durch die Auswerteelektronik 5 ausgewertet wird. Bei den Spannungen $U_1$ und $U_2$ handelt es sich um ein Sinus-Signal 6 und ein Cosinus-Signal 7. Jeweils ein Wertepaar (Sinus-Wert $U_1$, Cosinus-Wert $U_2$) ist einem Drehwinkel θ' der rotierenden Welle 4 zuordenbar. Beide Signale 6, 7 besitzen eine Periodizität von 180°. Dies ist beispielsweise bei einem AMR-Sensor gegeben. Da die AMR-Signale eine Periodizität von 180° besitzen, muss (falls nötig) mit zusätzlichem Aufwand bestimmt werden, ob sich die rotierende Welle 4 in den ersten oder zweiten 180° einer Umdrehung befindet. Möglichkeiten zur Erweiterung des Absolutwinkelmessbereichs auf 360° sind im Stand der Technik bekannt (zum Beispiel aus DE-A 100 426 02 oder DE-A 198 39 446) und sollen hier nicht näher erläutert werden.
Die Formeln zu den beiden Signalen 6, 7 lauten:

$$U_1\,(\theta) = U_{01} + \Delta U \sin\,(2\theta),$$

$$U_2\,(\theta) = U_{02} + \Delta U \cos\,(2\theta).$$

Die Signale 6, 7 weisen jeweils einen Offset ($U_{01}$, $U_{02}$) auf und besitzen eine Amplitude $\Delta U$. Der Drehwinkel θ wird aus dem Sinus-Signal 6 und dem Cosinus-Signal 7 im Stand der Technik mit Hilfe der Arkustangensfunktion berechnet, die auf den Quotienten $U_1/U_2$ angewendet wird. Dies kostet viel Rechenzeit und ist für eine hochdynamische Winkelbestimmung nicht geeignet.
Das Ergebnis der Winkelberechnung ist in der rechten Hälfte von Fig. 1a dargestellt. Der berechnete Winkel θ' liegt zwischen 0 und 180°. Pro Umdrehung (also über 360°) der rotierenden Welle 4 wird folglich zweimal der gleiche Drehwinkel θ' gemessen, zunächst im Bereich von 0° bis 180°, dann im Bereich von 180° bis 360°. Daraus folgt, dass bei einem von einem solchen Winkelsensor (zum Beispiel AMR-Sensor) ausgegebenen Drehwinkel θ' von zum Beispiel 60° der wahre Drehwinkel θ der rotierenden Welle 4 sowohl bei 60° als auch bei 240° liegen kann.

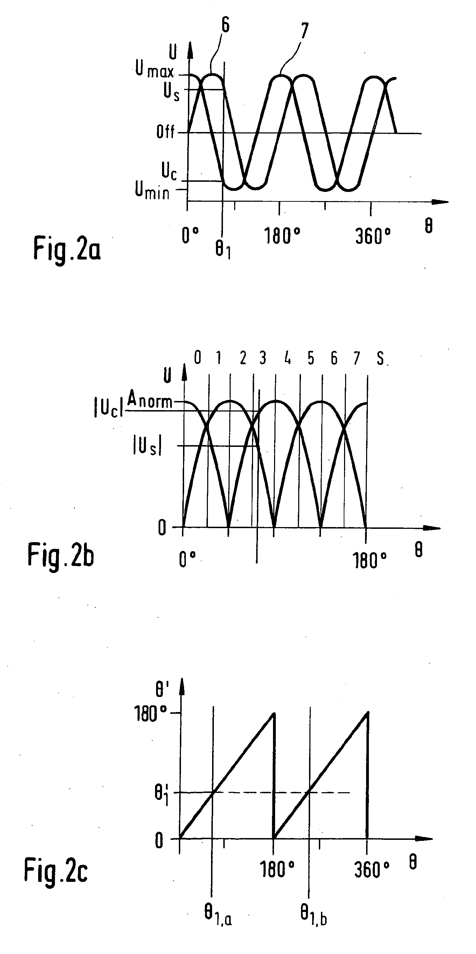

Fig. 2a bis 2c zeigen einen graphische Erläuterung zu einer bevorzugten Ausführungsform des erfindungsgemäßen Verfahrens.

Fig. 2a zeigt das Sinus-Signal 6 und das Cosinus-Signal 7 eines Winkelsensors mit einer Periodizität von 180°. Die Signale 6, 7 weisen dabei einen Offset (Off) und noch keine normierten Amplituden auf. In diesem Fall haben die Signale den gleichen Offset (Off). Üblicherweise unterscheiden sie sich jedoch in der Höhe des Offsets. Die Sinus- und Cosinus-Werte in Figur 2a liegen zwischen einer maximalen Spannung $U_{max}$ und einer minimalen Spannung $U_{min}$. Es werden folglich im Laufe des erfindungsgemäßen Verfahrens eine Offsetkorrektur und eine Amplitudennormierung durchgeführt.

Gemäß Schritt A) des erfindungsgemäßen Verfahrens werden zunächst ein Cosinus-Wert $U_c$ und ein Sinus-Wert $U_s$ bestimmt, die dem zu bestimmenden Drehwinkel $\theta_1$ zugeordnet sind. Anschließend (Schritt B)) folgt die Zuordnung dieser zwei Werte $U_c$ und $U_s$ zu einem von n Sektoren, in dieser Ausführungsvariante zu einem von acht Sektoren (S = 0 bis 7).

Da der Basiswinkel anhand des Betrags des Cosinus- oder Sinus-Wertes bestimmt wird, erfolgt die Betragsbildung durch Spiegelung der negativen Sinus- und Cosinus-Werte an der Offsetlinie bzw. nach der Offsetkorrektur an der Nulllinie. Das Ergebnis der Offsetkorrektur, Betragsbildung und Amplitudennormierung ist in Fig. 2b dargestellt. Die Werte liegen nun zwischen Null und der normierten Amplitude $A_{norm}$. Weiterhin sind die acht Sektoren mit den Sektornummern S = 0 bis 7 eingezeichnet, die jeweils einen Winkelbereich von 22,5° umfassen.

In Schritt C) des erfindungsgemäßen Verfahrens wird ein dem Cosinus- und/oder dem Sinus-Wert ($U_c$, $U_s$) zugeordneter Basiswinkel anhand einer Tabelle ermittelt, die die zu dem amplitudennormierten Betrag des Cosinus-Wertes $|U_c|$ und/oder zum dem amplitudennormierten Betrag des Sinus-Wertes $|U_s|$ gehörenden Arkusfunktionswerte enthält. Zur Berechnung des Drehwinkels $\theta_1'$ muss dann der Basiswinkel in den richtigen Sektor "verlegt" werden. Dazu wird der Basiswinkel zu oder von einem von der Zuordnung in Schritt B) abhängigen Sektorgrenzwinkel addiert oder subtrahiert.

Die in Schritt B) durchgeführte Zuordnung der Cosinus- und Sinus-Werte zu einem von acht Sektoren (0 bis 7) erfolgt gemäß einer ersten besonders bevorzugten Ausführungsform der vorliegenden Erfindung anhand der folgenden Zuordnungskriterien:

a) der Sinus-Wert ist größer bzw. gleich oder kleiner 0

b) der Cosinus-Wert ist größer bzw. gleich oder kleiner 0 und

c) der Betrag des Cosinus- oder der Betrag des Sinus-Wertes ist größer oder

c') der Betrag des Cosinus- oder der Betrag des Sinus-Wertes ist kleiner.

Die Zuordnung ist der folgenden Zuordnungstabelle zu entnehmen und auch aus Figur 2b ersichtlich:

Tabelle 1)

| Zuordnungskriterium | | | Sektor |
|---|---|---|---|
| a) | b) | c) | |
| $\geq$ | $\geq$ | cos | 0 |
| $\geq$ | $\geq$ | sin | 1 |
| $\geq$ | < | sin | 2 |
| $\geq$ | < | cos | 3 |
| < | < | cos | 4 |
| < | < | sin | 5 |
| < | $\geq$ | sin | 6 |
| < | $\geq$ | cos | 7 |

Diese Zuordnungstabelle ist wie folgt zu lesen: Spalte a) ist zu entnehmen, ob der Sinuswert größer bzw. gleich oder kleiner Null ist und Spalte b), ob der Cosinuswert größer bzw. gleich oder kleiner Null ist (nach der Offsetkorrektur). Aus Spalte c) ist ersichtlich, welcher Wert größer ist, der Cosinus- oder der Sinuswert (nach der Betragsbildung und der Amplitudennormierung). Die letzte Spalte enthält den Sektor, dem ein Wertepaar zugeordnet wird, das die jeweiligen Kriterien aus den anderen Spalten erfüllt. Beispielsweise werden alle Wertepaare ($U_S$, $U_C$), für die der

Sinus-Wert $U_s = \sin(2\theta)$ kleiner als 0 ist (a), der Cosinus-Wert $U_c = \cos(2\theta)$ größer oder gleich 0 ist (b)) und für die der Betrag des Sinus-Wertes größer ist als der Betrag des Cosinus-Wertes (c)), dem Sektor 6 zugeordnet. Alle acht Sektoren unterscheiden sich in mindestens einem Zurordnungskriterium, so dass jedes Wertepaar (Sinus-Wert, Cosinus-Wert) genau einem Sektor zugeordnet wird.

Vorzugsweise wird anschließend (Schritt C) der Tabelle mit den Arkusfunktionswerten jeweils der Basiswinkel entnommen, der dem betragsmäßig kleineren Wert (Sinus- oder Cosinus-Wert) zugeordnet ist. Beispielsweise wird für ein Wertepaar (Sinus-Wert, Cosinus-Wert), das gemäß den oben ausgeführten Zuordnungskriterien dem Sektor 6 zugeordnet wurde, der Basiswinkel zum betragsmäßig kleineren Cosinus-Wert aus der Tabelle entnommen. Dies hat den Vorteil, dass die Auswertung im annähernd linearen Bereich der Sinus- oder Cosinus-Funktion erfolgt. Durch diese Auswertung im Bereich der steilen Flanken der jeweiligen Funktion wird eine hohe Winkelauflösung erreicht.

Bei der Verwendung der oben genannten bevorzugten Zuordnungskriterien a, b, c oder a, b, c' wird der Basiswinkel in Schritt C) des erfindungsgemäßen Verfahrens vorzugsweise einer Tabelle entnommen, die die Arkusfunktionswerte zu nur einer trigonometrischen Funktion enthält, insbesondere einer Tabelle mit Arkussinusfunktionswerten. Dies hat den Vorteil, dass die Tabelle so klein wie möglich gehalten wird, um Speicherplatz zu sparen. Vorzugsweise werden also der Sinus- und der Cosinus-Wert in Schritt B) einem von acht Sektoren zugeordnet und der Basiswinkel zum Betrag des Cosinus- oder Sinus-Wertes in Schritt C) anhand einer Tabelle bestimmt, die Arkussinusfunktionswerte enthält, wobei jeweils der Basiswinkel zum betragsmäßig kleineren Cosinus- oder Sinuswert bestimmt wird. Der Basiswinkel liegt dabei immer zwischen 0° und 22,5°, also in Sektor 0. Anschließend lässt sich der so bestimmte Basiswinkel $\beta$ in Abhängigkeit von dem in Schritt

B) zugeordneten Sektor (S= 0 bis 7) in einen Drehwinkel $\theta'$ wie folgt umrechnen (Schritt D)):

Tabelle 2)

| Sektor | Zur Bestimmung des Basiswinkels herangezogener Betrag | Winkelberechnung |
|---|---|---|
| 0 | $|\sin(2\theta)|$ | $\theta' = \beta$ |
| 1 | $|\cos(2\theta)|$ | $\theta' = 45° - \beta$ |
| 2 | $|\cos(2\theta)|$ | $\theta' = 45° + \beta$ |
| 3 | $|\sin(2\theta)|$ | $\theta' = 90° - \beta$ |
| 4 | $|\sin(2\theta)|$ | $\theta' = 90° + \beta$ |
| 5 | $|\cos(2\theta)|$ | $\theta' = 135° - \beta$ |
| 6 | $|\cos(2\theta)|$ | $\theta' = 135 + \beta$ |
| 7 | $|\sin(2\theta)|$ | $\theta' = 180° - \beta$ |

Folglich wird bei dem oben genannten Beispiel bei einem dem Sektor 6 zugeordneten Wertepaar der Tabelle der Arkussinuswert zum Betrag des Cosinus-Wertes als Basiswinkel $\beta$ entnommen und zur Bestimmung des mechanischen Drehwinkels $\theta'$ zu 135° addiert.

Der aus dieser Berechnung resultierende Winkel $\theta'$ ist in Fig. 2c dargestellt. Er liegt zwischen 0° und 180°. Aufgrund der Periodizität der Signale von 180° kann der von dem Winkelsensor ausgegebene Drehwinkel $\theta_1'$ einem "wahren" mechanischen Drehwinkel von $\theta_{1,a} = \theta_1'$ oder $\theta_{1,b} = \theta_1' + 180°$ entsprechen.

Zur Erläuterung der oben genannten ersten bevorzugten Ausführungsform folgt nun ein Beispiel:

Wenn der "wahre" mechanische Drehwinkel 70° beträgt, so betragen die zugehörigen vom Winkelsensor ausgelesenen auf eins normierten und offsetkorrigierten Signale $\sin(2\theta)=0{,}64$ und $\cos(2\theta)=-0{,}766$ (abzulesen aus Fig. 2a). Dabei ist der Cosinus-Wert <0, der Sinus-Wert >0 und der Cosinus-Wert betragsmäßig größer. Gemäß Tabelle 1 ist dieses Wertepaar folglich dem Sektor 3 zuzuordnen. Aus einer die Arkussinusfunktionswerte enthaltenen Tabelle wird der zum betragsmäßig kleineren Wert (hier Sinus-Wert) gehörende Basiswinkel entnommen ($\arcsin 0{,}64 = 40° = 2\beta$). Der Basiswinkel beträgt demnach 20°. Zur Berechnung des Drehwinkels wird die der Tabelle 2 für Sektor 3 zu entnehmende Rechenoperation durchgeführt ($\theta' = 90° - \beta$), so dass der Drehwinkel $\theta'$ korrekterweise als 70° berechnet wird.

Gemäß einer zweiten bevorzugten Ausführungsvariante der vorliegenden Erfindung werden die Wertepaare in Schritt B) einem von vier Sektoren nach den folgenden Zuordnungskriterien zugeordnet:

    i) der Sinus-Wert ist größer bzw. gleich oder kleiner 0 und

ii) der Cosinus-Wert ist größer bzw. gleich oder kleiner 0.

Die Winkelbereiche der einzelnen Sektoren sind dann (bei einer Periodizität von 180°) 45° breit. Die Zuordnung ist der folgenden Zuordnungstabelle zu entnehmen:

Tabelle 3)

| Zuordnungskriterium | | Sektor |
|---|---|---|
| i) | ii) | |
| $\geq$ | $\geq$ | I |
| $\geq$ | < | II |
| < | < | III |
| < | $\geq$ | IV |

Die Tabelle zur Bestimmung des Basiswinkels enthält in dieser Ausführungsvariante sowohl Arkussinus- als auch Arkuscosinus-Werte zu den möglichen Beträgen der vom Winkelsensor gemessenen Cosinus- und Sinus-Werte. Es wird wiederum vorzugsweise der Basiswinkel zum betragsmäßig kleineren Wert entnommen, beispielsweise der Arkussinuswert zum Sinus-Wert falls dieser betragsmäßig kleiner ist oder der Arkuscosinuswert zum Cosinus-Wert falls dieser betragsmäßig kleiner ist. Der Basiswinkel liegt immer zwischen 0° und 45°, also in Sektor I. Der Drehwinkel wird dann anhand der folgenden Tabelle berechnet:

Tabelle 4)

| Sektor | Winkelberechnung |
|---|---|
| I | $\theta' = \beta$ |
| II | $\theta' = 90° - \beta$ |
| II | $\theta' = 90° + \beta$ |
| IV | $\theta' = 180° - \beta$ |

Rechenbeispiel:

- $\theta = 70°$
- gemessene (normierte und offsetkorrigierte) Werte: $\cos(2\theta) = -0,766$, $\sin(2\theta) = 0,64$
- Zuordnung zu Sektor II) weil $\sin(2\theta) > 0$, $\cos(2\theta) < 0$,
- Bestimmung des Basiswinkels zu $|\sin(2\theta)|$ : arcsin $0,64 = 40° = 2\beta$ => $\beta = 20°$
- Tabelle 4 => $\theta' = 90° - \beta = 70°$.

Grundsätzlich ist das erfindungsgemäße Verfahren ebenso für Winkelsensoren mit Signalen einer anderen Periodizität anwendbar (zum Beispiel GMR-Sensoren mit einer Periodizität von 360°).

Ein kritischer Punkt bei dem erfindungsgemäßen Verfahren ist jedoch der Übergangspunkt von der Basiswinkelbestimmung mit dem Betrag des Sinus-Wertes zur Basiswinkelbestimmung mit dem Betrag des Cosinus-Wertes und umgekehrt. Wenn sich die Amplituden und Offset-Werte der beiden Kurven nicht sehr gut gleichen, kommt es beim Übergang zu erheblichen Winkelsprüngen, da der Übergabepunkt, bei dem Sinus und Cosinus den gleichen Betragswert haben, dann nicht dem gleichen Winkel entsprechen. Um diesem Problem vorzubeugen, müssen der Offset permanent gemessen und korrigiert und die Amplituden so aneinander angeglichen (normiert) werden, dass es nicht zu solchen Winkelsprüngen kommt. Dazu werden die Minima und die Maxima der beiden Signale bestimmt. Um sicherzugehen, dass jeweils das Minimum und das Maximum erfasst wurde, muss mindestens eine AMR-Umdrehung (180° mechanische Umdrehung) erfolgt sein. Eine noch höhere Sicherheit ergibt sich bei der Messung einer ganzen mechanischen Umdrehung (360°). Da bei der Feststellung, ob eine vollständige (mechanische) Umdrehung durchgeführt wurde, aus noch nicht oder schlecht abgeglichenen Offsetwerten und Amplituden herrührende Winkelsprünge einen störenden Einfluss haben, wird ein Verfahren angewendet, das solche Störungen toleriert. Hierfür wird eine Periode in mehrere, vorzugsweise drei Winkelbereiche unterteilt, die nacheinander durchlaufen werden müssen. Beispielsweise werden drei Winkelbereiche über einen 360°-Bereich verteilt, die jeweils 60° abdecken. Diese Winkelbe-

**EP 1 455 164 A1**

reiche sind jeweils äquidistant zueinander über den 360°-Bereich verteilt und zwischen je zwei Winkelbereichen liegt jeweils ein neutraler Bereich. Eine erfolgte Umdrehung wird nun festgestellt, wenn die Winkelabschnitte nacheinander (in der richtigen Reihenfolge) durchlaufen werden. Durch Winkelsprünge wird entweder ein Winkel in dem aktuellen Winkelabschnitt bestimmt oder er springt in den neutralen Bereich zwischen den definierten Winkelbereichen. Wurden während einer Umdrehung alle Winkelbereiche in der richtigen Reihenfolge durchlaufen, so ist sichergestellt, dass eine komplette mechanischen Umdrehung erfolgte und folglich Minima und Maxima erfasst wurden. Offsetwerte und Nomierungsfaktoren können anschließend berechnet werden.

Bezugszeichenliste

1    Winkelsensor
2    Leiterplatte
3    Magnet
4    rotierende Welle
5    Auswerteelektronik
6    Sinus-Signal
7    Cosinus-Signal

**Patentansprüche**

1.  Verfahren zur Bestimmung eines Drehwinkels auf der Grundlage von mittels mindestens einem Winkelsensor gemessenen Signalen, umfassend ein dem Drehwinkel zuordenbares Sinus-Signal und ein dem Drehwinkel zuordenbares Cosinus-Signal, mit folgenden Schritten:

    A) Bestimmung eines Cosinus-Wertes und eines Sinus-Wertes, die dem zu bestimmenden Drehwinkel zugeordnet sind,

    B) Zuordnung des Cosinus- und des Sinus-Wertes zu einem von n Sektoren, in die eine Periode des Sinus- und Cosinus-Signals einteilbar ist, anhand von eindeutigen Zuordnungskriterien,

    C) Bestimmung eines dem Betrag des Cosinus- und/oder Sinus-Wertes zugeordneten Basiswinkels anhand einer Tabelle, die zu dem Betrag des Cosinus-Wertes und/oder zu dem Betrag des Sinus-Wertes gehörende Arkusfunktionswerte enthält und

    D) Addition oder Subtraktion des Basiswinkels zu oder von einem von der Zuordnung in Schritt B) abhängigen Sektorgrenzwinkel zur Berechnung des Drehwinkels.

2.  Verfahren gemäß Anspruch 1, **dadurch gekennzeichnet, dass** mit dem gemessenen Sinus-Signal und dem gemessenen Cosinus-Signal eine Offset-Korrektur und eine Amplitudennormierung durchgeführt werden.

3.  Verfahren gemäß Anspruch 1, **dadurch gekennzeichnet, dass** der Cosinus-Wert und der Sinus-Wert in Schritt B) einem von vier oder acht Sektoren zugeordnet wird.

4.  Verfahren gemäß Anspruch 1, **dadurch gekennzeichnet, dass** der Cosinus- und der Sinus-Wert in Schritt B) einem von vier Sektoren anhand der folgenden Zuordnungskriterien zugeordnet werden:

    i) der Sinus-Wert ist größer bzw. gleich oder kleiner 0 und
    ii) der Cosinus-Wert ist größer bzw. gleich oder kleiner 0.

5.  Verfahren gemäß Anspruch 1, **dadurch gekennzeichnet, dass** der Cosinus- und der Sinus-Wert in Schritt B) einem von acht Sektoren anhand der folgenden Zuordnüngskriterien zugeordnet werden:

    a) der Sinus-Wert ist größer bzw. gleich oder kleiner 0,
    b) der Cosinus-Wert ist größer bzw. gleich oder kleiner 0 und
    c) der Betrag des Cosinus- oder der Betrag des Sinus-Wertes ist größer oder

c) der Betrag des Cosinus- oder der Betrag des Sinus-Wertes ist kleiner.

**6.** Verfahren gemäß Anspruch 1, **dadurch gekennzeichnet, dass** zur Offset-Korrektur jeweils ein Offset für das Sinus-Signal und das Cosinus-Signal mittels der folgenden Formel berechnet wird:

$$Offset= \frac{I_{max} + I_{min}}{2},$$

mit

$I_{max}$ = Maximalwert des Sinus- bzw. Cosinus-Signals und
$I_{min}$ = Minimalwert des Sinus- bzw. Cosinus-Signals.

**7.** Verfahren gemäß Anspruch 1, **dadurch gekennzeichnet, dass** zur Amplitudennormierung jeweils ein Normierungsfaktor N für das Sinus-Signal und für das Cosinus-Signal mittels der folgenden Formel berechnet wird.

$$N= \frac{A_{norm}}{(I_{max} - I_{min})/2},$$

mit

$I_{max}$ = Maximalwert des Sinus- bzw. Cosinus-Signals und
$I_{min}$ = Minimalwert des Sinus- bzw. Cosinus-Signals und
$A_{norm}$ = normierte Amplitude.

**8.** Verfahren gemäß Anspruch 1, **dadurch gekennzeichnet, dass** die gemessenen Signale durch zweifache (in kurzen Zeitintervallen aufeinanderfolgende) A/D-Abtastung von an Ausgängen des Winkelsensors anliegenden Spannungen und anschließende Mittelwertbildung und Tiefpassfilterung oder durch einfache A/D-Abtastung und anschließende Filterung mit einem Medianfilter von Störsignalen bereinigt werden.

**9.** Verfahren gemäß Anspruch 1, **dadurch gekennzeichnet, dass** in Schritt C) jeweils der Basiswinkel entnommen wird, der dem betragsmäßig kleineren Wert (Sinus- oder Cosinus-Wert) zugeordnet ist.

**10.** Verfahren gemäß Anspruch 1, **dadurch gekennzeichnet, dass** der Cosinus- und der Sinus-Wert in Schritt B) einem von acht Sektoren zugeordnet werden und der Basiswinkel zum Betrag des Cosinus- oder Sinus-Wertes in Schritt C) anhand einer Tabelle bestimmt wird, die zugehörige Arkussinusfunktionswerte enthält, wobei jeweils der Basiswinkel zum betragsmäßig kleineren Cosinus- oder Sinus-Wert bestimmt wird.

# Fig.1

# Fig.1a

Fig.2a

Fig.2b

Fig.2c

**Europäisches Patentamt**

# EUROPÄISCHER RECHERCHENBERICHT

Nummer der Anmeldung

EP 04 00 2388

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | DE 195 48 385 A (SIEMENS AG.)<br>3. Juli 1997 (1997-07-03) | 1,3,9 | G01D5/14<br>G01D5/20 |
| Y | * Spalte 1, Zeilen 49,50,56,57,65,66 *<br>* Spalte 2, Zeilen 3-5,9-12 *<br>* Spalte 6, Zeile 53 *<br>* Spalte 7, Zeilen 13,33,53 *<br>* Spalte 9, Zeilen 58-68 *<br>* Spalte 10, Zeilen 1-3 *<br>----- | 2,4-8,10 | |
| Y | DE 100 42 602 A (ROBERT BOSCH GMBH, 70469 STUTTGART, DE) 28. März 2002 (2002-03-28)<br>* Seite 4, Zeilen 6,7,10,11,25,30-35 *<br>----- | 2,6,7 | |
| Y | EP 1 093 993 A (ALPS ELECTRONIC CO., LTD. TOKYO 145-8501 (JP))<br>25. April 2001 (2001-04-25)<br>* Spalte 6, Zeilen 23-27 *<br>* Abbildungen 4-6 *<br>----- | 4,5,10 | |
| Y | EP 0 724 137 A (SONY MAGNESCALE INC. SHINAGAWA-KU, TOKYO 141 (JP))<br>31. Juli 1996 (1996-07-31)<br>* Seite 5, Zeilen 31,32 *<br>* Abbildung 9 *<br>----- | 8 | **RECHERCHIERTE SACHGEBIETE (Int.Cl.7)**<br><br>G01D |

Der vorliegende Recherchenbericht wurde für alle Patentansprüche erstellt

| Recherchenort | Abschlußdatum der Recherche | Prüfer |
|---|---|---|
| Den Haag | 5. Juli 2004 | Moulara, G |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

........................................................................
& : Mitglied der gleichen Patentfamilie, übereinstimmendes Dokument

EPO FORM 1503 03.82 (P04C03)

## ANHANG ZUM EUROPÄISCHEN RECHERCHENBERICHT
### ÜBER DIE EUROPÄISCHE PATENTANMELDUNG NR.

EP 04 00 2388

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

05-07-2004

| Im Recherchenbericht angeführtes Patentdokument | | Datum der Veröffentlichung | Mitglied(er) der Patentfamilie | | Datum der Veröffentlichung |
|---|---|---|---|---|---|
| DE 19548385 | A | 03-07-1997 | DE | 19548385 A1 | 03-07-1997 |
| DE 10042602 | A | 28-03-2002 | DE | 10042602 A1 | 28-03-2002 |
| | | | WO | 0218880 A1 | 07-03-2002 |
| | | | EP | 1315946 A1 | 04-06-2003 |
| | | | JP | 2004507752 T | 11-03-2004 |
| | | | US | 2003019114 A1 | 30-01-2003 |
| EP 1093993 | A | 25-04-2001 | JP | 2001114116 A | 24-04-2001 |
| | | | EP | 1093993 A2 | 25-04-2001 |
| | | | US | 6424147 B1 | 23-07-2002 |
| EP 0724137 | A | 31-07-1996 | JP | 8201111 A | 09-08-1996 |
| | | | JP | 8201110 A | 09-08-1996 |
| | | | DE | 69613867 D1 | 23-08-2001 |
| | | | DE | 69613867 T2 | 31-10-2001 |
| | | | EP | 0724137 A1 | 31-07-1996 |
| | | | US | 5706219 A | 06-01-1998 |

EPO FORM P0461

Für nähere Einzelheiten zu diesem Anhang : siehe Amtsblatt des Europäischen Patentamts, Nr.12/82